# FASCICULE DE BREVET EUROPEEN

(11) **EP 2 351 317 B1**
(45) Date de publication et mention de la délivrance du brevet: **23.04.2014**
(21) Numéro de dépôt: 09740325.7
(22) Date de dépôt: 23.10.2009
(51) Int. Cl.: H04L 29/06

(54) **OUTIL DE SUPERVISION ET/OU D'HYPERVISION CENTRALISEE D'UN ENSEMBLE DE SYSTEMES DE NIVEAUX DE SECURITE DIFFERENTS**
WERKZEUG ZUR ZENTRALISIERTEN ÜBERWACHUNG UND/ODER HYPERVISION VON EINER ANORDNUNG VON SYSTEMEN MIT VERSCHIEDENEN SICHERHEITSNIVEAUS
TOOL FOR THE CENTRALISED SUPERVISION AND/OR HYPERVISION OF A SET OF SYSTEMS HAVING DIFFERENT SECURITY LEVELS

(30) Priorité: 24.10.2008 FR 0805918
(43) Date de publication de la demande: 03.08.2011
(73) Titulaire: THALES, 92200 Neuilly-sur-Seine (FR)
(72) Inventeur: LINDEN, Jean-Christophe, F-95250 Beauchamp (FR); BRETON, Sébastien, 72610 Arconnay (FR); OGER, Pierre, F-78290 Croissy sur Seine (FR)
(74) Mandataire: Lucas, Laurent Jacques
(86) Numéro de dépôt international: PCT/EP2009/064003
(87) Numéro de publication internationale: WO 2010/046480

(56) Documents cités:
- US-A- 6 088 804
- US-B1- 7 127 743

## Description

La présente invention concerne un outil de supervision et/ou d'hypervision d'un ensemble de systèmes de niveaux de sécurité différents. Elle s'applique notamment à la surveillance centralisée de plusieurs systèmes d'information lorsque lesdits systèmes sont soumis à des contraintes de sécurité inégales.

Afin de surveiller des entités telles que des systèmes d'informations, des salles protégées, des systèmes de production ou de contrôle, il est connu d'employer un outil de supervision ou d'hypervision centralisée. Un outil de supervision rassemble sur un même lieu des indicateurs issus des différentes entités surveillées afin d'offrir une vision d'ensemble de l'état desdites entités. Un outil d'hypervision offre, en plus de l'outil de supervision, une vision synthétique des indicateurs d'état, des corrélations pouvant être opérées entre des indicateurs issues d'entités distinctes.

Cependant, lorsque les niveaux de sensibilité des données manipulées sur chacun des réseaux sont différentes, la surveillance centralisée desdits réseaux est rendue difficile du fait des contraintes imposées par les règlements visant la protection des données. L'interconnexion d'un premier système, de niveau de sécurité élevé, avec un second système, de niveau de sécurité plus faible, pose au moins deux types de problèmes : le fuite d'informations sensibles du premier système vers le second système et les intrusions provenant du second système.

Classiquement, les centres de supervision sont alors implantés au niveau du réseau de sécurité le plus élevé, les autres réseaux étant reliés via des liaisons mono-directionnelles au centre de supervision pour alimenter ledit centre en indicateurs d'état. Les communications étant effectuées dans le seul sens montant, aucune fuite d'information présente dans le réseau de sécurité le plus élevé n'est possible. Toutefois, la réglementation appliquée au niveau du réseau de sécurité le plus élevé induit généralement l'application de contraintes coûteuses, tant du point de vue technique qu'en matière de formation, d'organisation et d'habilitation du personnel.

Afin de placer un centre de supervision dans un réseau de sécurité plus faible pour éviter les contraintes susmentionnées, il est connu d'utiliser un système d'interconnexion multi-niveaux de sécurité. Selon un mode de fonctionnement, un tel système multi-niveaux est préalablement configuré afin de définir quels types de données sont confidentiels. Un étiquetage des flux de données est effectué pour distinguer les flux de données confidentiels des flux de données peu sensibles. Il faut donc définir manuellement, pour chacun des protocoles de communication utilisés, des étiquettes et des règles de filtrage à appliquer. Cette phase de configuration manuelle est longue et coûteuse. De plus, les étiquettes appliquées aux flux de données doivent être signées par des clés cryptographiques, ce qui nécessite la mise en oeuvre d'une infrastructure de gestion de clés.

Enfin, un outil de supervision et/ou d'hypervision doit pouvoir transmettre d'éventuelles alertes en temps réel, ce qui exclut d'emblée les solutions faisant appel à une intervention manuelle pour filtrer les informations sensibles.

Le document US 6,088,804, 11 July 2000, (2000-07-11), propose un système de supervision dynamique de sécurité capable de répondre à une pluralité d'attaques. Le système est basé sur des agents de sécurité qui détectent des événements liés à des attaques opérant au niveau des noeuds du réseau. Ces événements sont affichés sur écran permettant à l'administrateur réseau de prendre en réaction les mesures adéquates.

Un but de l'invention est de proposer un système de supervision et/ou d'hypervision peu coûteux, apte à fonctionner dans un réseau de niveau de sécurité relativement faible et permettant de recueillir et de centraliser en temps réel ou quasi-réel, sans risque de compromission de données sensibles, des informations issues de réseaux de niveaux de sécurité plus élevés. A cet effet, l'invention a pour objet un outil de supervision et/ou d'hypervision centralisée d'un ensemble de systèmes de niveaux de sécurité différents, lesdits systèmes émettant des messages, ledit outil comportant un système d'affichage, l'outil étant caractérisé en ce qu'au moins un système supervisé comprend une ou plusieurs passerelles de transformation des messages émis en données image, lesdites passerelles transmettant lesdites données image via une liaison mono-directionnelle au système d'affichage, au moins un des systèmes supervisés étant d'un niveau de sécurité plus élevé que le niveau de sécurité de la zone dans laquelle est disposé le système d'affichage.

L'outil selon l'invention effectue une rupture sémantique de l'information. Un avantage de cette rupture est que la donnée image issue de la transformation est difficilement interprétable par un automate, contrairement à une donnée textuelle, directement exploitable par un logiciel d'analyse. La création de canaux auxiliaires est ainsi rendue difficile. En outre, contrairement à ce qui est réalisé classiquement en matière de sécurité, la liaison mono-directionnelle transmet des informations du réseau de niveau de protection élevé vers un réseau de niveau de protection plus faible.

Selon un mode de réalisation de l'outil de supervision et/ou d'hypervision centralisée selon l'invention, au moins un système supervisé comprend une passerelle apte à agréger entre-eux plusieurs messages émis par ledit système supervisé pour générer un message au contenu sémantique plus grossier.

Cette agrégation de message permet de mélanger plusieurs informations afin de diminuer les risques de compromission de données sensibles.

Selon un mode de réalisation de l'outil de supervision et/ou d'hypervision centralisée selon l'invention, les liaisons mono-directionnelles sont des liaisons vidéo effectuant un déport d'affichage d'une passerelle vers un écran. Ce mode de réalisation réduit les risques d'intrusion informatique, la liaison étant uniquement dédiée à l'affichage d'images. Le système d'affichage peut alors comprendre un ou plusieurs écrans, au moins un écran étant associé à chaque système supervisé, une liaison mono-directionnelle reliant un système supervisé à le ou les écrans qui lui sont associés. Un « mur d'images » peut ainsi être réalisé, de sorte qu'un opérateur humain ayant accès au système d'affichage a à sa disposition une vue d'ensemble des réseaux de niveaux de sécurité différents.

Selon un autre mode de réalisation de l'outil de supervision et/ou d'hypervision centralisée selon l'invention, au moins une liaison mono-directionnelle est une liaison réseau apte à transporter les données images, le dispositif d'affichage comprenant au moins un écran relié à un module de traitement recevant lesdites images, le module de traitement étant équipé d'un logiciel apte à représenter les images issues de plusieurs réseaux sur le même écran. Ce mode de réalisation permet d'obtenir une représentation synthétique de l'état des différents réseaux sur le même écran.

Selon un mode de réalisation de l'outil de supervision et/ou d'hypervision centralisée selon l'invention, les messages sont des messages SNMP/UDP (« Simple Network Management Protocol » / « User Datagram Protocol »), la passerelle comprenant un adaptateur apte à transformer les messages SNMP/UDP en images.

Selon un mode de réalisation de l'outil de supervision et/ou d'hypervision centralisée selon l'invention, au moins une passerelle est adaptée à transformer les messages en données image en fonction du contenu sémantique desdits messages, contrairement à ce qu'effectuent classiquement de simples outils de transformation du format d'une donnée.

Selon un mode de réalisation de l'outil de supervision et/ou d'hypervision centralisée selon l'invention, les messages sont des indicateurs d'état, les images issues de la transformation desdits messages étant des représentations symboliques du contenu sémantique desdits indicateurs.

L'invention a également pour objet un procédé de supervision et/ou d'hypervision centralisée d'un ensemble de systèmes de niveaux de sécurité différents, au moins un système supervisé comprenant une ou plusieurs passerelles et des capteurs et/ou dispositifs d'alerte émettant des messages, lesdites passerelles étant reliées à un même système d'affichage, le procédé comprenant, pour au moins un système supervisé de niveau de sécurité supérieur au niveau de sécurité de la zone dans laquelle est disposée le système d'affichage, au moins les étapes suivantes :
o une passerelle comprise par ledit système supervisé reçoit et transforme les messages émis en données images ;
o ladite passerelle transmet, via une liaison mono-directionnelle, les données image au système d'affichage.

Selon une mise en oeuvre du procédé selon l'invention, le procédé comprend également une étape au cours de laquelle une passerelle agrège plusieurs messages entre-eux afin de créer un message au contenu sémantique plus grossier.

D'autres caractéristiques apparaîtront à la lecture de la description détaillée donnée à titre d'exemple et non limitative qui suit faite en regard de dessins annexés qui représentent :
- la figure 1, un premier mode de réalisation de l'outil d'hypervision selon l'invention,
- la figure 2, un second mode de réalisation de l'outil d'hypervision selon l'invention,
- la figure 3, un synoptique illustrant un premier exemple de procédé selon l'invention,
- la figure 4, un synoptique illustrant un deuxième exemple de procédé selon l'invention.

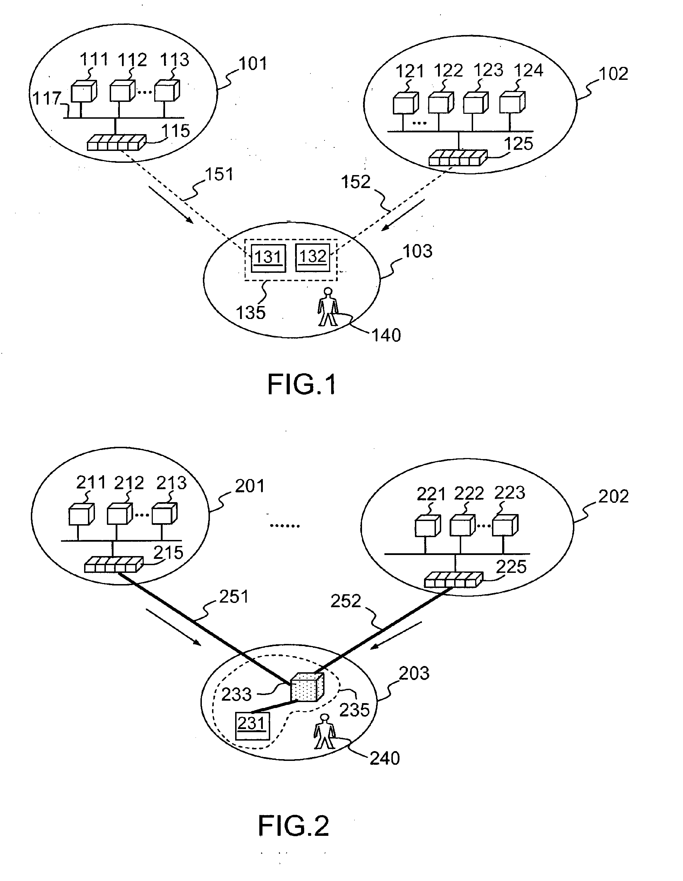

La figure 1 présente un premier mode de réalisation de l'outil de supervision/hypervision selon l'invention. L'outil de supervision/hypervision de la figure 1 vise à surveiller des réseaux indépendants 101, 102 à partir d'une zone 103 soumise à un niveau de sécurité plus faible qu'au moins un des réseaux surveillés 101, 102. Dans l'exemple, le premier réseau surveillé 101 est soumis à un niveau de sécurité maximal, le deuxième réseau surveillé 102 est soumis à un niveau de sécurité intermédiaire, et la zone 103 à partir de laquelle les réseaux sont surveillés est soumise à un niveau de sécurité minimal.

L'outil selon l'invention comprend un système d'affichage 135 disposé dans la zone 103 de sécurité minimale, le système d'affichage 135 comprenant au moins un écran, deux écrans 131, 132 dans l'exemple de la figure 1. Le système d'affichage 135 permet à un agent de surveillance 140 de connaître à tous moments la situation des réseaux supervisés 101, 102.

Le premier réseau supervisé 101 comprend des capteurs et/ou dispositifs d'alerte 111, 112, 113 reliés à une passerelle 115. Les capteurs et/ou dispositifs d'alerte 111, 112, 113 génèrent des messages, par exemple pour indiquer leur état. A titre d'illustration, un capteur de température 111 est apte à émettre un message pouvant prendre au choix trois valeurs différentes : « température normale », « température élevée », « incendie » ; un dispositif d'alerte 112 placé sur un coffre peut émettre deux états au choix : « coffre ouvert » ou « coffre fermé » ; un poste informatique pourvu d'un logiciel de détection anti-intrusion peut émettre au choix quatre états : « fonctionnement normal », « tentative d'intrusion », « intrusion détectée » ou « hors service ». Les messages sont transmis à la passerelle 115, par exemple via un réseau informatique 117 de type Ethemet. Selon un mode de réalisation de l'outil de supervision/hypervision selon l'invention, le protocole simple de gestion de réseau SNMP, en référence au sigle anglo-saxon « Simple Network Management Protocol », est utilisé pour lever des alertes. Les messages peuvent alors être transportés jusqu'à la passerelle 115 via des datagrammes UDP (« User Datagram Protocol »), par exemple.

La passerelle 115 transforme les messages issus des capteurs et/ou dispositifs d'alerte 111, 112, 113 en images. Autrement dit, les codes ou les données textuelles contenus dans les messages sont interprétés par la passerelle 115 qui, selon la nature et/ou la valeur du message, crée une image symbolisant le contenu sémantique du message. Ainsi, la passerelle reçoit des messages en entrée, mais ne produit que des images en sortie, de sorte qu'une rupture formelle importante est effectuée par la passerelle 115. A titre d'exemple, pour reprendre l'exemple précité du capteur de température, une image en forme de losange vert est produite lorsque le message reçu est « température normale », un losange orange pour la valeur « température élevée » et un losange rouge lorsque le message prend la valeur « incendie ». Les images peuvent être produites à intervalles rapprochés, de manière à générer un flux vidéo.

Par ailleurs, selon un mode de réalisation de l'outil selon l'invention, la passerelle 115 combine plusieurs messages avant de transformer le résultat de cette combinaison en une image. Par exemple, si la passerelle 115 reçoit un message « température normale » provenant d'un premier capteur de température et un autre message « température élevée » provenant d'un second capteur présent dans le même réseau que le premier capteur, alors une forme synthétique pour représenter ces deux informations combinées est générée, par exemple un hexagone orange au lieu de deux losanges respectivement vert et orange. Cette agrégation d'informations permet de générer une image au contenu sémantique plus grossier, en l'espèce, l'image générée signifie « au moins l'un des deux capteurs a détecté une température trop élevée ». Ainsi, d'un point de vue extérieur, seule cette information grossière peut être connue, limitant ainsi le risque de compromission de données sensibles. Dans l'exemple, cette agrégation de données peut être utilisée si, la connaissance de la température sur un seul des deux capteurs est une information confidentielle. Selon ce mode de réalisation, la passerelle 115 effectue donc deux traitements pour limiter les fuites de données confidentielles : l'agrégation d'informations portées par les messages et la rupture formelle pré décrite.

Une fois une image produite par la passerelle 115, cette image est transmise au premier écran 131 du système d'affichage 135 par une liaison 151 vidéo mono-directionnelle. Autrement dit, la liaison 151 est réalisée de telle sorte qu'aucune donnée ne puisse transiter du dispositif d'affichage 135 vers la passerelle 115. Selon le mode de réalisation présenté en figure 1, la liaison 151 ne transporte pas des paquets de données informatiques ; cette liaison permet un simple déport d'affichage sur un écran 131 distant de la passerelle 115.

Le deuxième réseau supervisé 102 comporte une structure analogue à celle du premier réseau 101, c'est-à-dire des capteurs et/ou dispositifs d'alerte 121, 122, 123, 124 reliés à une passerelle 125, laquelle transmet des données images au second écran 132 du dispositif d'affichage 135 via une seconde liaison mono-directionnelle 152.

Selon un autre mode de réalisation, chacun des réseaux supervisés 101, 102 peut comprendre plusieurs passerelles, le déport d'affichage étant alors effectué pour chacune des passerelles.

La figure 2 présente un second mode de réalisation de l'outil de supervision/hypervision selon l'invention. L'outil de supervision/hypervision de la figure 2 vise à surveiller des réseaux indépendants 201, 202 à partir d'une zone 203 soumise à un niveau de sécurité plus faible qu'au moins un des réseaux surveillés 201, 202. Dans l'exemple, le premier réseau surveillé 201 est soumis à un niveau de sécurité maximal, le deuxième réseau surveillé 202 est soumis à un niveau de sécurité intermédiaire, et la zone 203 à partir de laquelle les réseaux sont surveillés est soumise à un niveau de sécurité minimal.

Selon ce second mode de réalisation, l'outil selon l'invention comprend un système d'affichage 235 disposé dans la zone 203 de sécurité minimale, le système d'affichage 235 comprenant au moins un écran 231 et un module de traitement 233, lequel est par exemple un poste informatique.

De la même manière que dans le premier mode de réalisation présenté en figure 1, au moins une passerelle 215, 225 présente dans un réseau supervisé 201, 202 transforme les messages émis par des capteurs 211, 212, 213, 221, 222, 223 en images.

Néanmoins, à la différence du premier mode de réalisation, les images sont transmises de chacune des passerelles 215, 225 vers le dispositif d'affichage 235 via une liaison réseau mono directionnelle 251, 252 et l'utilisation d'un protocole non connecté. Les images sont alors reçues par le module de traitement 233, lequel combine les images reçues des différents réseaux pour produire une représentation graphique synthétique, cette représentation étant affichée sur l'écran 231 associé au module de traitement 233.

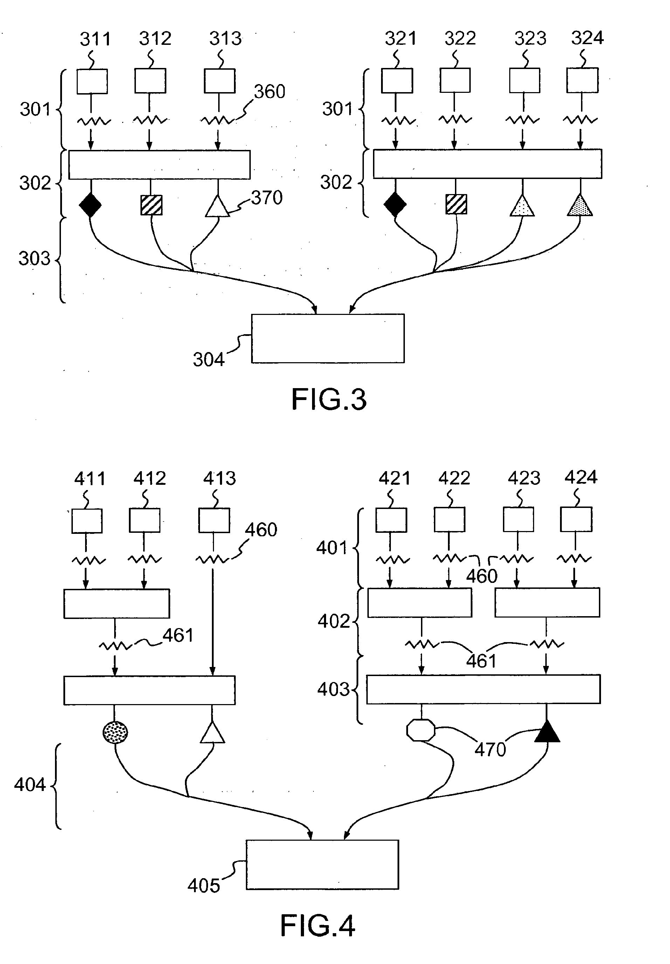

La figure 3 illustre, par un synoptique, un premier exemple de procédé selon l'invention.

Pour un réseau à superviser, dans un premier temps 301, des capteurs 311, 312, 313, 321, 322, 323, 324 du réseau produisent des messages 360, par exemple sous forme de code ou de texte. Dans un deuxième temps 302, le contenu sémantique des messages 360 est interprété et transformé en image 370 par une passerelle. Dans un troisième temps 303, les images 370 précédemment produites sont transmises via une liaison mono-directionnelle au dispositif d'affichage.

Dans un quatrième temps 304, le dispositif d'affichage utilise les images 370 issues des différents réseaux pour produire une représentation graphique de la situation supervisée.

La figure 4 illustre, par un synoptique, un deuxième exemple de procédé selon l'invention comprenant une étape supplémentaire d'agrégation sémantique de messages.

Pour un réseau à superviser, dans un premier temps 401, des capteurs 411, 412, 413, 421, 422, 423, 424 du réseau produisent des messages 460, par exemple sous forme de code ou de texte. Dans un deuxième temps 402, des messages 460 sont agrégés entre-eux pour former un message 461 au contenu sémantique plus grossier. Dans un troisième temps 403, le contenu sémantique des messages 460, 461 est interprété et transformé en image 470 par une passerelle.

Dans un quatrième temps 404, les images 470 précédemment produites sont transmises via une liaison mono-directionnelle au dispositif d'affichage.

Dans un cinquième temps 405, le dispositif d'affichage utilise les image 470 issues des différents réseaux pour produire une représentation graphique de la situation supervisée.

L'outil de supervision/hypervision selon l'invention peut, par exemple, être utilisé par une entreprise pour surveiller l'intégrité de ses réseaux informatiques et de ses salles de coffres, ces réseaux et salles étant indépendants les uns des autres, certains réseaux et salles étant plus sensibles que d'autres. Dans ce contexte, l'outil de supervision/hypervision est, de préférence, placé dans une zone peu sensible, par exemple au niveau de l'accueil de l'entreprise. Un agent de surveillance sans besoin de qualification ou d'accréditation particulier est alors chargé de veiller sur l'outil pour transmettre aux personnes compétentes une éventuelle alerte levée sur l'un des systèmes surveillés. L'outil selon l'invention est donc utilisé pour effectuer une surveillance passive par l'agent, lequel n'a pas pour rôle d'intervenir sur le réseau ayant levé l'alerte.

## Revendications

1. Outil de supervision et/ou d'hypervision centralisée d'un ensemble de systèmes de niveaux de sécurité différents, lesdits systèmes (101, 102) émettant des messages, ledit outil comportant un système d'affichage (135), l'outil étant **caractérisé en ce qu'**au moins un système supervisé comprend une ou plusieurs passerelles (115, 125) de transformation des messages émis en données image, lesdites passerelles transmettant lesdites données image via une liaison mono-directionnelle (151, 152) au système d'affichage, au moins un des systèmes supervisés étant d'un niveau de sécurité plus élevé que le niveau de sécurité de la zone dans
laquelle est disposé le système d'affichage.

2. Outil de supervision et/ou d'hypervision centralisée selon la revendication 1, **caractérisé en ce qu'**au moins un système supervisé comprend une passerelle (115) apte à agréger entre-eux plusieurs messages émis par ledit système supervisé pour générer un message au contenu sémantique plus grossier.

3. Outil de supervision et/ou d'hypervision centralisée selon l'une des revendications 1 et 2, **caractérisé en ce que** les liaisons mono-directionnelles sont des liaisons vidéo effectuant un déport d'affichage d'une passerelle vers un écran.

4. Outil de supervision et/ou d'hypervision centralisée selon la revendication 3, **caractérisé en ce que** le système d'affichage comprend un ou plusieurs écrans (131, 132), au moins un écran étant associé à chaque système supervisé (101, 102), une liaison (151, 152) mono-directionnelle reliant un système supervisé à le ou les écrans qui lui sont associés.

5. Outil de supervision et/ou d'hypervision centralisée selon l'une des revendications 1 et 2, **caractérisé en ce qu'**au moins une liaison mono-directionnelle (251, 252) est une liaison réseau apte à transporter les données images, le système d'affichage comprenant au moins un écran relié à un module de traitement (233) recevant lesdites images, le module de traitement (233) étant équipé d'un logiciel apte à représenter les images issues de plusieurs systèmes sur le même écran (231).

6. Outil de supervision et/ou d'hypervision centralisée selon l'une des revendications précédentes, **caractérisé en ce que** les messages sont des messages SNMP/UDP, la passerelle comprenant un adaptateur apte à transformer les messages SNMP/UDP en images.

7. Outil de supervision et/ou d'hypervision centralisée selon l'une des revendications précédentes, **caractérisé en ce qu'**au moins une passerelle est adaptée à transformer les messages en données image en fonction du contenu sémantique desdits messages.

8. Outil de supervision et/ou d'hypervision centralisée selon l'une des revendications précédentes, **caractérisé en ce que** les messages sont des indicateurs d'état, les images issues de la transformation desdits messages étant des représentations symboliques du contenu sémantique desdits indicateurs.

9. Procédé de supervision et/ou d'hypervision centralisée d'un ensemble de systèmes de niveaux de sécurité différents, au moins un système supervisé comprenant une ou plusieurs passerelles et des capteurs et/ou dispositifs d'alerte émettant des messages (301), lesdites passerelles étant reliées à un même système d'affichage (135), le procédé étant **caractérisé en ce qu'**il comprend, pour au moins un système supervisé de niveau de sécurité supérieur au niveau de sécurité de la zone dans laquelle est disposée le système d'affichage, au moins les étapes suivantes :
○ une passerelle comprise par ledit système supervisé reçoit et transforme les messages émis en données images (302) ;
○ ladite passerelle transmet, via une liaison mono-directionnelle, les données image au système d'affichage (303).

10. Procédé de supervision et/ou d'hypervision centralisée selon la revendication 9, **caractérisé en ce qu'**il comprend également une étape (402) au cours de laquelle une passerelle agrège plusieurs messages entre-eux afin de créer un message au contenu sémantique plus
grossier.

## Patentansprüche

1. Werkzeug zur zentralisierten Überwachung und/oder Hypervision eines Satzes von Systemen mit unterschiedlichen Sicherheitsniveaus, wobei die Systeme (101, 102) Nachrichten aussenden, wobei das Werkzeug ein Anzeigesystem (135) umfasst, wobei das Werkzeug **dadurch gekennzeichnet ist, dass** wenigstens ein überwachtes System ein oder mehrere Gateways (115, 125) zum Umwandeln von ausgesendeten Nachrichten in Bilddaten umfasst, wobei die Gateways die Bilddaten über eine monodirektionale Verbindung (151, 152) zum Anzeigesystem übertragen, wobei wenigstens eines der überwachten Systeme ein Sicherheitsniveau hat, das höher ist als das Sicherheitsniveau der Zone, in der sich das Anzeigesystem befindet.

2. Werkzeug zur zentralisierten Überwachung und/oder Hypervision nach Anspruch 1, **dadurch gekennzeichnet, dass** wenigstens ein überwachtes System ein Gateway (115) zum Anhäufen untereinander von mehreren durch das überwachte System ausgesendeten Nachrichten zum Erzeugen einer Nachricht mit einem gröberen semantischen Inhalt umfasst.

3. Werkzeug zur zentralisierten Überwachung und/oder Hypervision nach einem der Ansprüche 1 und 2, **dadurch gekennzeichnet, dass** die monodirektionalen Verbindungen Videoverbindungen sind, die eine Anzeigeverlagerung von einem Gateway zu einem Bildschirm bewirken.

4. Werkzeug zur zentralisierten Überwachung und/oder Hypervision nach Anspruch 3, **dadurch gekennzeichnet, dass** das Anzeigesystem einen oder mehrere Bildschirme (131, 132) umfasst, wobei wenigstens ein Bildschirm mit jedem überwachten System (101, 102) assoziiert ist, wobei eine monodirektionale Verbindung (151, 152) ein überwachtes System mit dem oder den damit assoziierten Bildschirm(en) verbindet.

5. Werkzeug zur zentralisierten Überwachung und/oder Hypervision nach einem der Ansprüche 1 bis 2, **dadurch gekennzeichnet, dass** wenigstens eine monodirektionale Verbindung (251, 252) eine Netzverbindung ist, die die Bilddaten transportieren kann, wobei das Anzeigesystem wenigstens einen Bildschirm umfasst, der mit einem die Bilder empfangenden Verarbeitungsmodul (233) verbunden ist, wobei das Verarbeitungsmodul (233) mit einer Software zum Darstellen der von mehreren Systemen ausgegebenen Bilder auf demselben Bildschirm (231) ausgestattet ist.

6. Werkzeug zur zentralisierten Überwachung und/oder Hypervision nach einem der vorherigen Ansprüche, **dadurch gekennzeichnet, dass** die Nachrichten SNMP/UDP-Nachrichten sind, wobei das Gateway einen Adapter zum Umwandeln der SNMP/UDP-Nachrichten in Bilder umfasst.

7. Werkzeug zur zentralisierten Überwachung und/oder Hypervision nach einem der vorherigen Ansprüche, **dadurch gekennzeichnet, dass** wenigstens ein Gateway zum Umwandeln der Nachrichten in Bilddaten in Abhängigkeit von dem semantischen Inhalt der Nachrichten ausgelegt ist.

8. Werkzeug zur zentralisierten Überwachung und/oder Hypervision nach einem der vorherigen Ansprüche, **dadurch gekennzeichnet, dass** die Nachrichten Zustandsindikatoren sind, wobei die ausgegebenen Bilder der Umwandlung der Nachrichten symbolische Darstellungen des semantischen Inhalts der Indikatoren sind.

9. Verfahren zur zentralisierten Überwachung und/oder Hypervision eines Satzes von Systemen mit unterschiedlichen Sicherheitsniveaus, wobei wenigstens ein überwachtes System ein oder mehrere Gateways und Sensoren und/oder Warnvorrichtungen umfasst, die Nachrichten (301) aussenden, wobei die Gateways mit einem selben Anzeigesystem (135) verbunden sind, wobei das Verfahren **dadurch gekennzeichnet ist, dass** es für wenigstens ein überwachtes System mit einem Sicherheitsniveau, das höher ist als das Sicherheitsniveau der Zone, in der sich das Anzeigesystem befindet, wenigstens die folgenden Schritte beinhaltet:
• Empfangen und Umwandeln, durch ein Gateway, das Teil des überwachten Systems ist, der ausgesendeten Nachrichten in Bilddaten (302);
• Übertragen, durch das Gateway über eine monodirektionale Verbindung, der Bilddaten zu dem Anzeigesystem (303).

10. Verfahren zur zentralisierten Überwachung und/oder Hypervision nach Anspruch 9, **dadurch gekennzeichnet, dass** es auch einen Schritt (402) beinhaltet, in dessen Verlauf ein Gateway mehrere Nachrichten untereinander anhäuft, um eine Nachricht mit einem gröberen semantischen Inhalt zu erzeugen.

## Claims

1. Tool for centralised supervision and/or hypervision of an assembly of systems having different security levels, the systems (101, 102) transmitting messages, the tool comprising a display system (135), the tool being **characterised in that** at least one supervised system comprises one or more gateways (115, 125) for converting the transmitted messages into image data, the gateways transmitting the image data via a mono-directional connection (151, 152) to the display system, at least one of the supervised systems having a higher security level than the security level of the zone in which the display system is arranged.

2. Tool for centralised supervision and/or hypervision according to claim 1, **characterised in that** at least one supervised system comprises a gateway (115) which is capable of aggregating together a plurality of messages transmitted by the supervised system in order to generate a message with coarser semantic content.

3. Tool for centralised supervision and/or hypervision according to either claim 1 or claim 2, **characterised in that** the mono-directional connections are video connections which carry out a display forwarding from a gateway to a screen.

4. Tool for centralised supervision and/or hypervision according to claim 3, **characterised in that** the display system comprises one or more screens (131, 132), at least one screen being associated with each supervised system (101, 102), a mono-directional connection (151, 152) connecting a supervised system to the screen(s) which is/are associated with it.

5. Tool for centralised supervision and/or hypervision according to either claim 1 or claim 2, **characterised in that** at least one mono-directional connection (251, 252) is a network connection which is capable of transporting the image data, the display system comprising at least one screen which is connected to a processing module (233) which receives the images, the processing module (233) being provided with an item of software which is capable of representing the images from several systems on the same screen (231).

6. Tool for centralised supervision and/or hypervision according to any one of the preceding claims, **characterised in that** the messages are SNMP/UDP messages, the gateway comprising an adapter which is capable of converting the SNMP/UDP messages into images.

7. Tool for centralised supervision and/or hypervision according to any one of the preceding claims, **characterised in that** at least one gateway is adapted to convert the messages into image data in accordance with the semantic content of the messages.

8. Tool for centralised supervision and/or hypervision according to any one of the preceding claims, **characterised in that** the messages are status indicators, the images from the conversion of the messages being symbolic representations of the semantic content of the indicators.

9. Method for centralised supervision and/or hypervision of an assembly of systems having different security levels, at least one supervised system comprising one or more gateways and sensors and/or alerting devices which transmit messages (301), the gateways being connected to the same display system (135), the method being **characterised in that** it comprises, for at least one supervised system having a higher security level than the security level of the zone in which the display system is arranged, at least the following steps:
• a gateway included by the supervised system receives and converts the messages transmitted into image data (302);
• the gateway transmits, via a mono-directional connection, the image data to the display system (303).

10. Method for centralised supervision and/or hypervision according to claim 9, **characterised in that** it also comprises a step (402) during which a gateway aggregates a plurality of messages together in order to create a message with coarser semantic content.
